# FASCICULE DE BREVET EUROPEEN

(11) **EP 1 710 413 B1**
(45) Date de publication et mention de la délivrance du brevet: **17.02.2010**
(21) Numéro de dépôt: 06290554.2
(22) Date de dépôt: 05.04.2006
(51) Int. Cl.: F01P 11/10, F01P 5/06, F04D 29/54

(54) **Série de blocs avant de véhicule automobile**
Reihe von Kraftfahrzeugfrontteilen
Series of front parts of automotive vehicles

(30) Priorité: 06.04.2005 FR 0503444
(43) Date de publication de la demande: 11.10.2006
(73) Titulaire: Faurecia Cooling Systems, 92000 Nanterre (FR)
(72) Inventeur: Gassmann, Jean-Marie, 90500 Beaucourt (FR)
(74) Mandataire: Blot, Philippe Robert Emile

(56) Documents cités:
- EP-A- 0 073 476
- US-A1- 2002 015 640

## Description

La présente invention qui est revendiquée dans les revendications 1, 10 et 11, concerne une série de blocs avant de véhicule automobile, le bloc avant comprenant un échangeur de chaleur, un élément de canalisation, une hélice, et des moyens d'entraînement en rotation de l'hélice pour créer un écoulement d'air balayant l'échangeur de chaleur, l'élément de canalisation étant du type comprenant :
- un carénage, adapté pour être monté sur l'échangeur de chaleur, le carénage délimitant un conduit de guidage de l'écoulement d'air s'étendant le long d'un axe d'écoulement, et comprenant une paroi périphérique adaptée pour entourer la périphérie de l'hélice ;
- une couronne additionnelle de guidage de l'écoulement d'air comprenant des moyens de fixation qui coopèrent avec des moyens complémentaires de fixation prévus sur le carénage.

L'invention s'applique en particulier à la ventilation d'échangeurs de chaleur placés dans les blocs avant de véhicule automobile, notamment à la ventilation de radiateurs de refroidissement de moteurs thermiques.

La plupart des véhicules actuels sont équipés d'un climatiseur, dont l'échangeur de chaleur doit être refroidi en complément du radiateur du moteur thermique. Ainsi, un ventilateur présentant une hélice de grand diamètre doit être prévue dans le bloc avant pour assurer un refroidissement efficace.

Toutefois, un certain nombre de véhicules sont dépourvus de climatisation. Dans ces véhicules, l'écoulement d'air nécessaire au refroidissement de l'échangeur de chaleur est réduit par rapport aux véhicules du même type munis d'un climatiseur. Une hélice de plus petite taille peut donc être utilisée.

Pour obtenir un rendement de ventilation efficace, on connaît de EP-A-0 073 476, qui montre les caractéristiques du préambule des revendications 1, 10 et 11, un élément de canalisation de type précité qui présente un interstice réduit entre la paroi périphérique du conduit de guidage d'air et la périphérie de l'hélice.

Par suite, pour maintenir le rendement du ventilateur constant pour une même gamme de véhicules, au moins deux types d'éléments de canalisation du type précité doivent être prévus en fonction de la taille de l'hélice équipant le ventilateur. Le coût de l'ensemble de canalisation est donc augmenté.

Un but de l'invention est de fournir un ensemble de canalisation pour bloc avant de coût réduit, qui ne diminue pas le rendement du ventilateur.

A cet effet, l'invention a pour objet un élément de canalisation pour bloc avant de véhicule automobile de type précité, caractérisé en ce que la couronne additionnelle est adaptée pour être disposée entre la paroi périphérique et la périphérie de l'hélice pour réduire la section de passage d'air dans le conduit.

L'élément de canalisation selon l'invention peut comprendre une ou plusieurs des caractéristiques suivantes, prise(s) isolément ou suivant toutes combinaisons techniquement possibles :
- la couronne additionnelle s'étend sensiblement totalement dans le conduit de guidage ;
- les moyens de fixation et/ou les moyens de fixation complémentaires comprennent des moyens de blocage du déplacement axial de la couronne par rapport au carénage ;
- les moyens de blocage comprennent au moins une butée axiale avant et au moins une butée axiale arrière, les butées axiales avant et arrière étant solidaires du carénage ou de la couronne ;
- les butées axiales avant et arrière sont solidaires de la couronne et sont en appui respectivement sur un bord avant et un bord arrière de la paroi périphérique ;
- les moyens de fixation ou/et les moyens de fixation complémentaires comprennent une pluralité d'organes de fixation de la couronne disposés autour de l'axe d'écoulement, la couronne comprenant des organes de renfort disposés entre les organes de fixation ;
- l'une des butées axiale avant et arrière est solidaire de l'organe de fixation et l'autre des butées axiales avant et arrière est solidaire de la couronne ; et
- les moyens de fixation sont venus de matière avec la couronne.

L'invention a en outre pour objet un bloc avant de véhicule automobile caractérisé en ce qu'il comprend :
- un échangeur de chaleur ;
- un élément de canalisation tel que défini ci-dessus, le carénage étant monté sur l'échangeur de chaleur ; et
- une hélice disposée dans le conduit de guidage, la paroi périphérique entourant la périphérie de l'hélice, la couronne additionnelle étant disposée entre la paroi périphérique et la périphérie de l'hélice.

Le bloc avant selon l'invention peut comprendre la caractéristique suivante :
- l'hélice comprend une virole périphérique s'étendant en regard de la couronne, des surfaces en regard de la virole et de la couronne étant de formes sensiblement complémentaires.

L'invention a également pour objet un carénage pour un élément de canalisation tel que défini ci-dessus, adapté pour être monté sur l'échangeur de chaleur, le carénage délimitant un conduit de guidage de l'écoulement d'air et comprenant une paroi périphérique adaptée pour entourer la périphérie de l'hélice, caractérisé en ce que le carénage comprend des moyens de fixation complémentaires aptes à coopérer avec des moyens de fixation prévus sur une couronne additionnelle de guidage de l'écoulement d'air, la couronne étant adaptée pour être disposée entre la paroi périphérique et la périphérie de l'hélice pour réduire la section de passage d'air dans le conduit.

L'invention sera mieux comprise à la lecture de la description qui va suivre, donnée uniquement à titre d'exemple et faite en se référant aux dessins annexés, sur lesquels :
- la Figure 1 est une vue partielle en perspective d'un bloc avant pour véhicule automobile selon l'invention ;
- la Figure 2 est une vue en coupe partielle suivant le plan vertical II-II d'un détail de la Figure 1 ; et
- la Figure 3 est une vue en coupe partielle suivant le plan vertical III-III d'un détail de la Figure 1 ;
- la Figure 4 est une vue agrandie en perspective des moyens de fixation de la couronne additionnelle du bloc avant de la Figure 1 ; et
- la Figure 5 est une vue analogue à la Figure 1 d'un bloc avant comprenant le même élément de canalisation que le bloc avant de la Figure 1, mais avec une hélice de plus grande taille.

Dans tout ce qui suit, les orientations utilisées sont les orientations habituelles d'un véhicule automobile.

En particulier, les termes « avant » et « arrière » s'entendent par rapport à la position du conducteur et au sens de marche du véhicule automobile. Par ailleurs, les termes « amont » et « aval » s'entendent par rapport au sens de circulation normale d'un fluide dans une conduite.

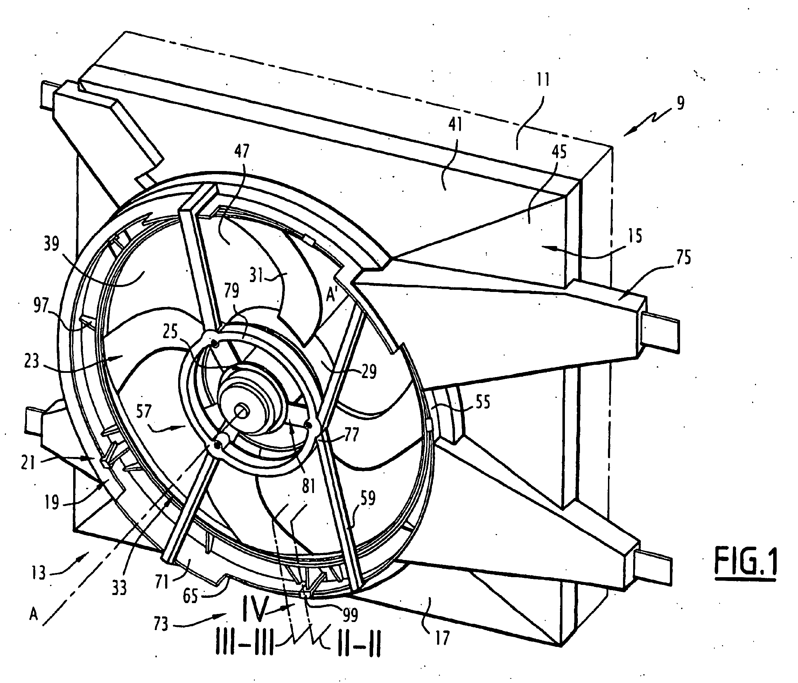

Les Figures 1 à 3 représentent un bloc avant 9 pour véhicule automobile comprenant de manière classique un échangeur de chaleur 11, un ventilateur 13 disposé à j'arrière de l'échangeur 11, et un élément de canalisation 15 d'un flux d'air comprenant un carénage 17 qui reçoit le ventilateur 13 et une couronne de guidage 19 additionnelle fixée dans le carénage 17 par des organes de fixation 21.

L'échangeur de chaleur 11 est par exemple un radiateur de refroidissement d'un moteur thermique de véhicule automobile. Il présente une forme générale parallélépipédique et une faible épaisseur. Cet échangeur est disposé sensiblement verticalement et transversalement par rapport au sens de marche du véhicule. Il comprend, par exemple et de manière classique, deux boîtes collectrices d'un fluide de refroidissement de moteur thermique, un faisceau de tubes reliant ces boîtes collectrices et par exemple des ailettes s'étendant entre les tubes. Une telle structure étant classique, les éléments mentionnés ci-dessus n'ont pas été représentés sur la Figure 1.

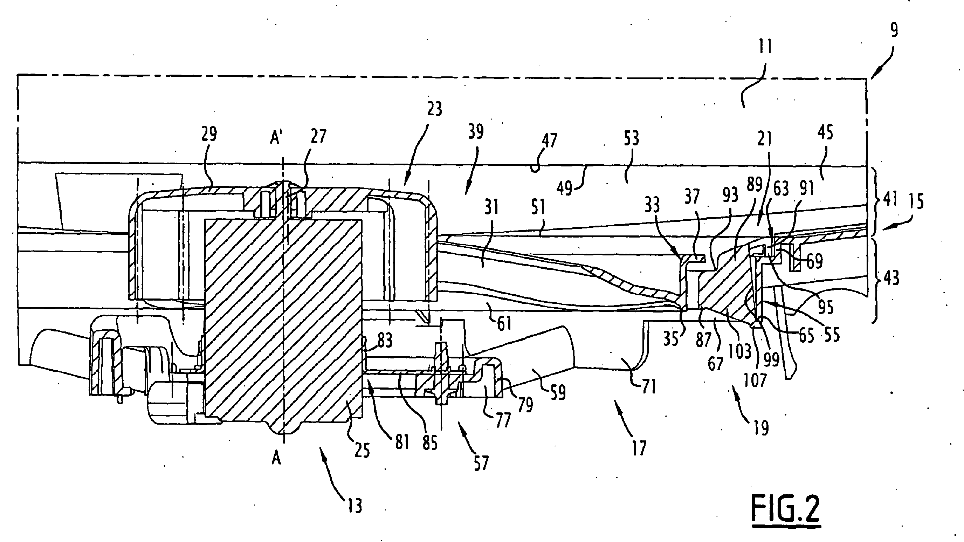

Comme illustré par la Figure 2, le ventilateur 13 comprend une hélice 23 et un moteur électrique 25 dont un arbre de sortie 27 est relié à l'hélice 23 pour l'entraîner en rotation autour d'un axe A-A' sensiblement longitudinal et horizontal.

Le ventilateur 13 améliore par convection forcée l'échange de chaleur entre l'air extérieur et le fluide de refroidissement thermique circulant dans l'échangeur de chaleur 11.

De manière classique, l'hélice 23 comprend un moyeu central 29 par lequel elle est reliée à l'arbre de sortie 27 et des pales 31 qui prolongent radialement le moyeu 29 vers l'extérieur. Dans l'exemple représenté, les extrémités radiales extérieures des pales 31 sont reliées entre elles par une virole 33 de section circulaire.

Les pales 31 de l'hélice 23 sont orientées pour créer un écoulement d'air s'écoulant vers l'arrière. Elles aspirent de l'air au travers de l'échangeur de chaleur 11. Le ventilateur 13 est alors dans une configuration dénommée configuration aspirante.

La virole circulaire 33 présente une section en forme de L renversé, prise dans un plan radiai par rapport à l'axe A-A'. La virole 33 comprend ainsi une paroi périphérique 35 qui s'étend sensiblement longitudinalement et un rebord avant 37 qui s'étend dans un plan transversal.

Comme illustré par la Figure 1, le carénage 17 s'étend le long de l'axe longitudinal A-A' d'écoulement d'air. Il délimite intérieurement un conduit de guidage 39 de l'écoulement d'air.

En référence à la Figure 2, le carénage 17 comprend une partie avant 41 montée sur l'échangeur 11, et une partie arrière 43 qui reçoit le ventilateur 13.

La partie avant 41 est formée par une jupe de guidage 45 de forme divergente de l'arrière vers l'avant.

La jupe 45 couvre une face arrière 47 de l'échangeur 11. Elle présente une ouverture avant 49 de forme sensiblement conjuguée à la face arrière 47 de l'échangeur 11 et une ouverture arrière 51 sensiblement circulaire. La jupe 45 délimite intérieurement entre l'ouverture avant 47 et l'ouverture arrière 51 une région avant 53 du conduit de guidage 39.

La partie arrière 43 comprend une paroi périphérique annulaire 55, et un support de moteur 57 disposé à l'arrière de cette paroi 55 et relié à la paroi 55 par des bras de support 59.

La paroi périphérique 55 délimite une région arrière 61 sensiblement cylindrique du conduit de guidage d'air 39 qui débouche dans la région avant 53 par l'ouverture arrière 51. L'hélice 23 et la couronne additionnelle de guidage 19 sont reçues dans cette région arrière 61, comme on va le décrire ci-dessous.

La section transversale intérieure de la région arrière 61 est sensiblement égale à la section transversale de l'ouverture arrière 51. Cette section est supérieure à la surface transversale délimitée à l'extérieur de la virole 33.

La longueur de la paroi périphérique 55, prise suivant l'axe longitudinal A-A' entre un bord avant 63 et un bord arrière 65, est supérieure à la longueur de la virole 33, prise suivant le même axe. La virole 33 est disposée sensiblement en regard de la paroi périphérique 55.

La virole 33 et la paroi périphérique 55 délimitent entre elles un espace annulaire intermédiaire 67 dans lequel est disposée la couronne additionnelle 19.

Le bord avant 63 de la paroi périphérique 55 comprend un gradin périphérique 69 s'ouvrant vers l'avant dans le conduit de guidage 25. Ce gradin 69 délimite un épaulement de support de la couronne de guidage 19.

Comme illustré par la Figure 1, le bord arrière 65 de la paroi 55 comprend une pluralité de prolongements longitudinaux arrière 71 qui délimitent entre eux des créneaux 73 autour de cette paroi 55. Dans l'exemple représenté, le bord arrière 65 comprend quatre prolongements 71.

Des rampes 75 de fixation du carénage 17 à l'échangeur 11 s'étendent radialement à l'extérieur de la paroi périphérique 55. Ces rampes sont venues de matière avec la jupe 45 et font saillie radialement à l'extérieur de la jupe 45 à leurs extrémités extérieures.

Un bras de liaison 59 s'étend radialement vers l'intérieur entre chaque prolongement arrière 71 de la paroi 55 et une extrémité intérieure 77 disposée dans le conduit de guidage 39.

Le support de moteur 57 comprend une couronne arrière 79 qui s'étend dans un plan transversal et une entretoise de fixation 81 du moteur reliant le moteur 25 à la couronne arrière 79.

La couronne 79 relie entre elles les extrémités intérieures 77 des bras de liaison 59. Son diamètre intérieur est supérieur au diamètre extérieur du moteur 25.

Comme représenté sur la Figure 2, l'entretoise de fixation 81 comprend un collier 83 de fixation qui enserre le moteur 25 et des languettes 85 radiales qui reüent le collier 83 à la couronne arrière 79. Les languettes 83 sont vissées sur la couronne arrière 79.

L'entretoise 81 est réalisée en un matériau de faible coût, de sorte que ses dimensions peuvent être facilement adaptées à différents types de moteurs 25.

Comme illustrée par les Figures 1 à 3, la couronne additionnelle 19 est interposée dans l'espace annulaire 67 défini entre la paroi périphérique 55 et la virole 33 de l'hélice pour réduire la section de passage d'air dans le conduit 39.

La couronne 19 est de forme générale tronconique divergente vers l'avant.

La longueur de la couronne 19 prise suivant l'axe longitudinal A-A' est sensiblement égale à celle de la paroi périphérique 55. Ainsi, la couronne additionnelle 19 s'étend sensiblement totalement dans la région arrière 61 du conduit délimitée par la paroi périphérique 55.

La couronne additionnelle 19 est réalisée à base d'un matériau de faible coût par rapport au matériau utilisé pour réaliser le carénage 17. La couronne 19 est par exemple réalisée à base de polypropylène non chargé neuf, ou issu du recyclage et du broyage de pièces en polypropylène ou/et en polyamide chargé ou non.

Des matières plastiques comprenant des charges végétales comme du chanvre peuvent également être utilisées pour réaliser la couronne 19.

La couronne 19 présente une tenue au flux d'air circulant dans le conduit et une résistance thermique adaptée à sa proximité du moteur thermique et/ou du filtre à particules. Toutefois, la tenue mécanique de l'élément de canalisation 15 est fournie par le carénage 17.

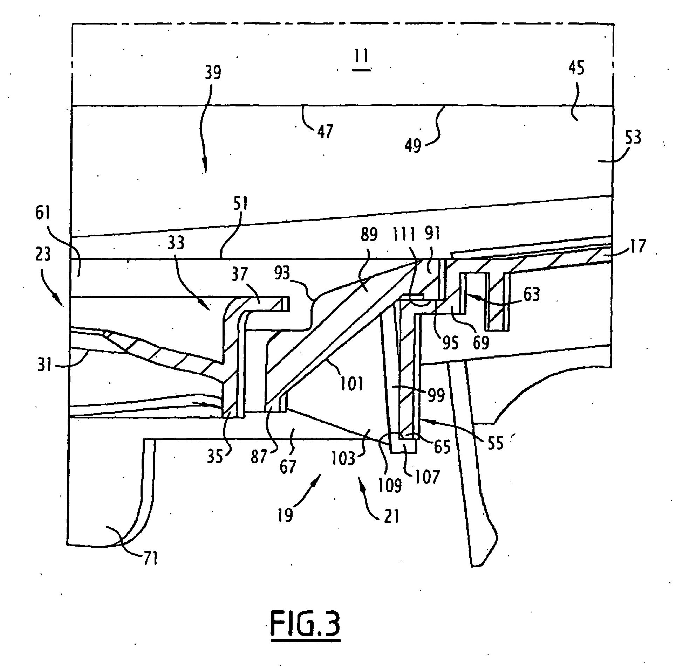

Comme illustré par la Figure 3, la couronne 19 présente une paroi périphérique 87 intérieure sensiblement longitudinale, une paroi périphérique 89 intermédiaire divergente vers l'avant, et un rebord périphérique 91 extérieur sensiblement annulaire.

La paroi intérieure 87 s'étend sensiblement en regard de la paroi périphérique 35 de la virole 33, avec interposition d'un jeu fonctionnel.

La paroi intermédiaire 89 délimite, sur une surface avant, un gradin 93 qui s'étend sensiblement en regard du rebord avant 37 de la virole 33.

Les surfaces en regard de la virole 33 et de la couronne additionnelle 19 sont donc de forme sensiblement complémentaires.

La paroi 89 réduit la section de passage d'air dans la région arrière 61 du conduit 39.

Le rebord extérieur 91 est reçu sur l'épaulement 69 de la paroi périphérique. Il comprend un bord arrière 95 en appui sur l'épaulement 69.

Comme illustré par la Figure 1, la couronne 19 comprend des nervures de renfort 97 disposées de part et d'autre des organes de fixation 21. Les nervures 97 s'étendent radialement entre la paroi intérieure 87 et le rebord extérieur 91.

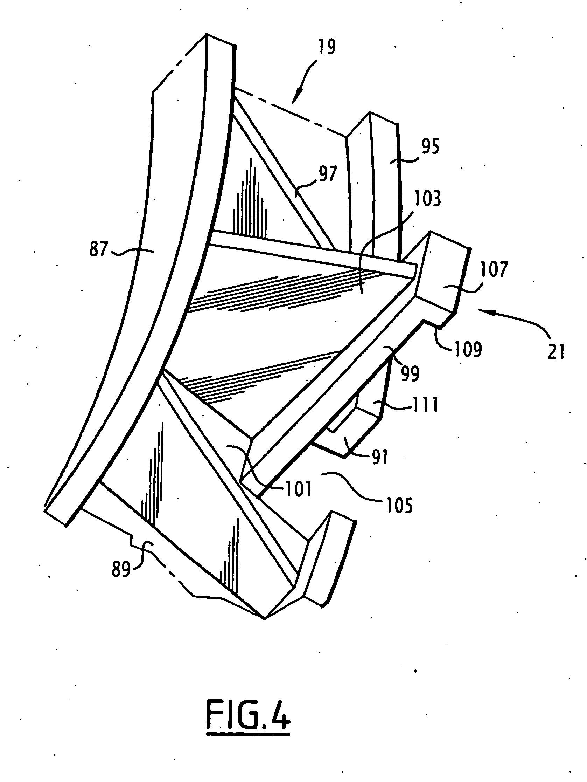

En référence à la Figure 4, les organes de fixation 21 comprennent une pluralité de pattes 99 de fixation réparties autour de l'axe longitudinal A-A', et les régions du rebord 91 situées au voisinage de ces pattes 99.

Les pattes 99 sont disposées en regard des créneaux 73 formés dans le bord arrière 65 de la paroi périphérique 55. Dans l'exemple représenté, cinq pattes 99 de structures analogues sont réparties autour de l'axe A-A'.

Chaque patte 99 est venue de matière avec la couronne additionnelle 19. Comme illustré par la Figure 4, la patte 99 s'étend sensiblement longitudinalement vers l'arrière à partir d'une surface arrière 101 de la paroi intermédiaire 89. La patte 99 est reliée à la paroi intérieure 87 par une entretoise 103 de renfort radiale.

Une échancrure 105 radiale s'ouvrant vers l'extérieur à partir de la patte 99 est ménagée dans la paroi intermédiaire 89 et dans le rebord 91 en regard de chaque patte 99.

La patte 99 comprend en outre, à son extrémité libre, une saillie 107 transversale, dirigée vers l'extérieur par rapport à l'axe A-A'.

La saillie 107 définit une surface 109 transversale arrière de butée dirigée vers l'avant. Cette surface 109 est située sensiblement en regard d'une surface transversale 111 avant de butée formée par le bord arrière 95 du rebord 91 et dirigée vers l'arrière. La distance qui sépare longitudinalement ces surfaces 109 et 111 est sensiblement égale à la distance entre l'épaulement 69 et le bord arrière 65 sur la paroi périphérique 55.

Ainsi, lorsque la couronne additionnelle 19 est montée dans le conduit 39, la surface arrière de butée 109 est en appui sur le bord arrière 65 de la paroi périphérique 55, et la surface avant de butée 111 est en appui sur l'épaulement 69 à l'avant de cette paroi 55. La patte 99 et le rebord 91 enserrent la paroi 55 entre son bord avant 63 et son bord arrière 65.

La patte 99 et le rebord périphérique 91 forment donc des moyens de blocage du déplacement axial de la couronne additionnelle 19 par rapport au carénage 17.

Les régions du bord arrière 65 situées entre deux prolongements 71 ainsi que les régions opposées du bord avant 63 forment sur le carénage 17 des moyens de fixation complémentaires qui coopèrent avec les organes de fixation 21 de la couronne 19.

Par ailleurs, lorsque la couronne 19 est montée sur le carénage 17, sa position angulaire autour de l'axe A-A' est réglable par coulissement des pattes 99 le long du bord arrière 65 dans les créneaux 73, et par coulissement du rebord 91 le long du bord avant 63, ce qui facilite son montage.

Un procédé de fabrication d'une série de blocs avant 9 selon l'invention va maintenant être décrit.

Dans un premier temps, une pluralité d'éléments de canalisation 15 de diamètre standard sont réalisés.

Si le véhicule sur lequel le carénage 17 doit être monté est un véhicule sans climatisation, une hélice 23 présentant un diamètre extérieur sensiblement inférieur au diamètre intérieur de la paroi 55 est utilisée. Dans ce cas, la différence de diamètre entre la virole extérieure 33 de l'hélice 23 et la paroi périphérique 55 est mesurée. Une couronne additionnelle 19 réalisée en un matériau moins coûteux que le carénage 17 est moulée. L'épaisseur radiale de cette couronne 19, c'est-à-dire la distance qui sépare radialement la paroi intérieure 87 du rebord 91, est sensiblement égale à la différence de diamètre mesurée.

La couronne additionnelle 19 est alors rapportée sur le carénage 17, par insertion de la paroi périphérique 55 entre les surfaces de butée 109 et 111 délimitées respectivement sur les pattes de fixation 99 et le rebord périphérique 91 de la couronne additionnelle. Puis, le moteur 20 et l'hélice 23 sont montés sur le support de moteur 57 du carénage.

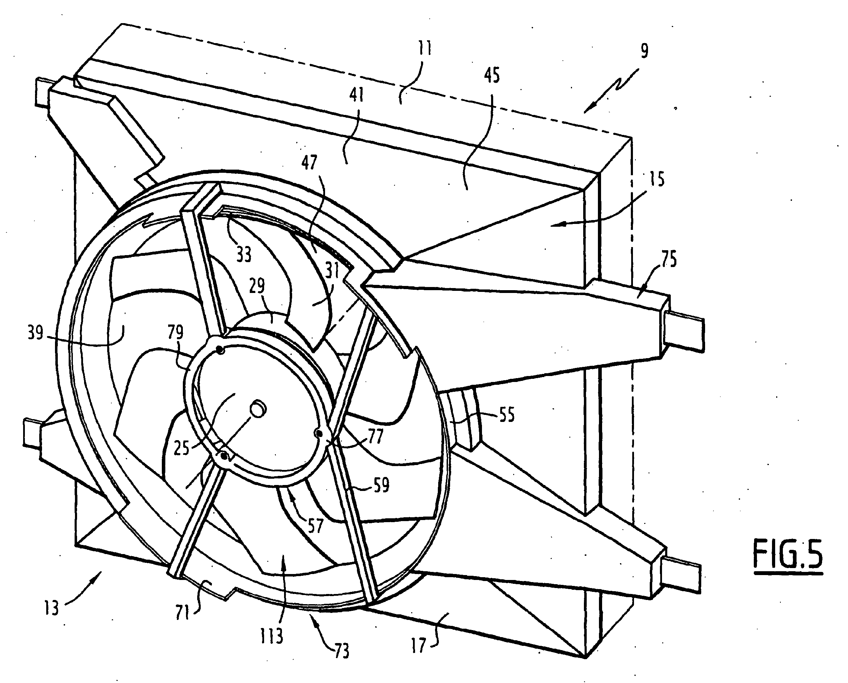

Comme illustré par la Figure 5, dans le cas où le véhicule comprend un climatiseur, une hélice 113 de diamètre extérieur sensiblement égal au diamètre intérieur de la paroi périphérique 55 est montée sur le même carénage 17. Le carénage 17 est alors dépourvu de couronne additionnelle. Par ailleurs, le moteur d'entraînement 25 de l'hélice 23 est calé directement dans le support 57 sans utiliser d'entretoise 81.

Grâce à l'invention qui vient d'être décrite il est donc possible d'utiliser un carénage 17 standard pour différents types de bloc avant 9 de véhicules automobiles.

Ainsi, si le véhicule est dépourvu de climatiseur, une hélice 23 de diamètre réduit est insérée dans le carénage 17, et le rendement hydraulique du ventilateur 13 est maintenu élevé grâce à la fixation d'une couronne additionnelle 19 entre la paroi périphérique 55 et la virole 33 de l'hélice.

Dans le cas où le véhicule comprend un climatiseur, une hélice 113 de diamètre sensiblement égal au diamètre de la paroi périphérique 55 est utilisée. Par suite, le coût du bloc avant 9 peut être réduit par standardisation, sans réduire le rendement du ventilateur 13.

En variante (non représentée), les organes de fixation 21 prévus sur la couronne 19 comprennent des moyens de liaison par encliquetage entre la couronne 19 et les bras de liaison 59. Les moyens de fixation complémentaires sur le carénage 17 sont formés par les régions des bras de liaison 59 recevant les moyens de liaison par encliquetage.

Dans une autre variante (non représentée), les moyens de fixation complémentaires comprennent des prolongements radiaux intérieurs de la paroi périphérique 55 pour caler la couronne additionnelle 19 entre deux surfaces de butée axiale. Ces prolongements sont par exemple venus de matière avec le carénage 17.

De manière générale, le ventilateur du bloc avant de la présente invention peut présenter également une configuration soufflante dans laquelle il est disposé à l'avant de l'échangeur de chaleur.

La série de blocs avant 9 selon l'invention peut être réalisée avant le montage des blocs avant 9 sur des véhicules automobiles. Dans ce cas, un premier type de blocs avant 9 tel que représentés sur la Figure 1, comprenant un élément de canalisation 15 muni d'une couronne additionnelle 19, et une hélice 23 de diamètre extérieur sensiblement inférieur au diamètre intérieur de la paroi périphérique 55 est fourni au constructeur en vue de leur assemblage sur des véhicules automobiles dépourvus de climatisation. Un deuxième type de bloc avant 9 illustré sur la Figure 5 comprenant un carénage 17 sensiblement identique au carénage 17 du premier type de blocs avant 9 et une hélice 113 de diamètre extérieur sensiblement égal au diamètre intérieur de la paroi périphérique 55 montée dans le carénage 17 est fourni au constructeur en vue de leur assemblage sur des véhicules automobiles munis de climatisation.

En variante, la série de blocs avant 9 selon l'invention peut être réalisée directement sur la chaîne de montage du véhicule automobile. Dans ce cas, le constructeur automobile reçoit une série d'éléments de canalisation 15 présentant des carénages 17 identiques. Puis, sur chaque véhicule dépourvu de climatisation, le constructeur monte une couronne additionnelle 19 sur le carénage 17, ainsi qu'une hélice 23 de diamètre extérieur sensiblement inférieur au diamètre intérieur de la paroi périphérique. Sur chaque véhicule muni de climatisation, le constructeur monte une hélice 113 de diamètre extérieur sensiblement égal au diamètre intérieur de la paroi périphérique sans placer de couronne additionnelle 19.

Dans un procédé de fabrication selon l'invention, on met à disposition un carénage 17 standard, au moins une hélice 113 de diamètre extérieur sensiblement égal au diamètre intérieur de la paroi périphérique 55, au moins une hélice 23 de diamètre extérieur sensiblement inférieur au diamètre intérieur de la paroi périphérique 55, et au moins une couronne additionnelle 19 de guidage de l'écoulement d'air comprenant des moyens de fixation 21 destinés à coopérer avec des moyens complémentaires 63, 65 de fixation prévus sur le carénage 17.

Puis, on sélectionne une configuration de bloc avant 9, sur la base d'un ordre de commande donné, entre une première configuration destinée aux véhicules sans climatisation et une deuxième configuration destinée aux véhicules avec climatisation.

Dans la première configuration, représentée sur la Figure 1, le bloc avant 9 comprend l'hélice 23 de diamètre extérieur sensiblement inférieur au diamètre intérieur de la paroi périphérique 55, montée sur le carénage standard 17 et la couronne additionnelle 19 de guidage de l'écoulement d'air, disposée entre la paroi périphérique 55 et la périphérie 33 de l'hélice 23 pour réduire la section de passage d'air dans le conduit 39.

Dans la deuxième configuration, représentée sur la Figure 5, le bloc avant 9 comprend l'hélice 113 de diamètre extérieur sensiblement égal au diamètre intérieur de ia paroi périphérique 55 montée sur le carénage standard 17.

Puis, on assemble le bloc avant 9 suivant la configuration sélectionnée, comme décrit précédemment.

## Revendications

1. Série de blocs avant (9) de véhicule automobile, chaque bloc avant (9) comprenant:
- un échangeur de chaleur (11);
- un élément de canalisation (15) ;
- un carénage (17), monté sur l'échangeur de chaleur (11), le carénage (17) délimitant un conduit (39) due guidage de l'écoulement d'air s'étendant le long d'un axe (A-A') d'écoulement, et comprenant une paroi périphérique (55) ;
- une hélice (23) disposée dans le conduit de guidage (39), et des moyens d'entraînement (20) en rotation de l'hélice pour créer un écoulement d'air balayant l'échangeur de chaleur (11) ;
la paroi périphérique (55) entourant la périphérie (33) de l'hélice (23) ;
**caractérisée en ce que** la série comprend au moins un premier bloc avant (9) comprenant une hélice (23) de diamètre extérieur sensiblement inférieur au diamètre intérieur de la paroi périphérique (55) ;
l'élément de canalisation (15) du premier bloc avant (9) comprenant une couronne additionnelle (19) de guidage de l'écoulement d'air comprenant des moyens de fixation (21) qui coopèrent avec des moyens complémentaires (63, 65) de fixation prévus sur le carénage (17), la couronne additionnelle (19) étant disposée entre la paroi périphérique (55) et la périphérie (33) de l'hélice (23) pour réduire la section de passage d'air dans le conduit (39) ;
et **en ce que** la série comprend au moins un deuxième bloc avant (9) comprenant une hélice (113) de diamètre extérieur sensiblement égal au diamètre intérieur de la paroi périphérique (55), le carénage (17) du deuxième bloc avant (9) étant identique au carénage (17) du premier bloc avant (9).

2. Série de blocs avant (9) selon la revendication 1, **caractérisée en ce que** la couronne additionnelle (19) s'étend sensiblement totalement dans le conduit de guidage (39).

3. Série de blocs avant (9) selon l'une quelconque des revendications 1 ou 2, **caractérisée en ce que** les moyens de fixation (21) et/ou les moyens de fixation complémentaires (63, 65) comprennent des moyens de blocage (95, 99) du déplacement axial de la couronne (19) par rapport au carénage (17).

4. Série de blocs avant (9) selon la revendication 3, **caractérisée en ce que** les moyens de blocage (95, 99) comprennent au moins une butée axiale avant (111) et au moins une butée axiale arrière (109), les butées axiales avant et arrière (111, 109) étant solidaires du carénage (17) ou de la couronne (19).

5. Série de blocs avant (9) selon la revendication 4, **caractérisée en ce que** les butées axiales avant et arrière (111, 109) sont solidaires de la couronne (19) et sont en appui respectivement sur un bord avant (63) et un bord arrière (65) de la paroi périphérique (55).

6. Série de blocs avant (9) selon l'une quelconque des revendications 1 à 5, **caractérisée en ce que** les moyens de fixation (21) ou/et les moyens de fixation complémentaires (63, 65) comprennent une pluralité d'organes (99) de fixation de la couronne (19) disposés autour de l'axe d'écoulement (A-A'), la couronne (19) comprenant des organes de renfort (97) disposés entre les organes de fixation (99).

7. Série de blocs avant (9) selon la revendication 6, prise en combinaison avec la revendication 4, **caractérisée en ce que** l'une (109) des butées axiale avant et arrière (111, 109) est solidaire de l'organe de fixation (99) et l'autre (111) des butées axiales avant et arrière est solidaire de la couronne (19).

8. Série de blocs avant (9) selon l'une quelconque des revendications précédentes, **caractérisée en ce que** les moyens de fixation (21) sont venus de matière avec la couronne (19).

9. Série de blocs avant (9) selon l'une quelconque des revendications précédentes, **caractérisée en ce que** l'hélice (23) comprend une virole périphérique (33) s'étendant en regard de la couronne (19), des surfaces en regard de la virole et de la couronne (19) étant de formes sensiblement complémentaires.

10. Procédé de fabrication d'une série de blocs avant (9) de véhicule automobile, chaque bloc avant (9) comprenant :
- un échangeur de chaleur (11) ;
- un élément de canalisation (15) ;
- un carénage (17), monté sur l'échangeur de chaleur (11), le carénage (17) délimitant un conduit (39) de guidage de l'écoulement d'air s'étendant le long d'un axe (A-A') d'écoulement, et comprenant une paroi périphérique (55) ;
- une hélice (23) disposée dans le conduit de guidage (39), et des moyens d'entraînement (20) en rotation de l'hélice pour créer un écoulement d'air balayant l'échangeur de chaleur (11),
la paroi périphérique (55) entourant la périphérie (33) de l'hélice (23) ;
**caractérisé en ce qu'**il comprend les étapes suivantes :
- fabrication d'au moins un premier bloc avant (9) comprenant les phases suivantes :
* fixation sur un premier carénage (17) d'une couronne additionnelle (19) de guidage de l'écoulement d'air comprenant des moyens de fixation (21) qui coopèrent avec des moyens complémentaires (63, 65) de fixation prévus sur le carénage (17), et
* montage d'une hélice (23) de diamètre extérieur sensiblement inférieur au diamètre intérieur de la paroi périphérique (55) sur le carénage (17);
la couronne additionnelle (19) étant disposée entre la paroi périphérique (55) et la périphérie (33) de l'hélice (23) pour réduire la section de passage d'air dans le conduit (39) ;
- fabrication d'au moins un deuxième bloc avant comprenant le montage d'une hélice (113) de diamètre extérieur sensiblement égal au diamètre intérieur de la paroi périphérique (55) sur un deuxième carénage (17) identique au premier carénage (17).

11. Procédé de fabrication d'un bloc avant (9) de véhicule automobile, le bloc avant (9) étant du type comprenant :
- un échangeur de chaleur (11);
- un élément de canalisation (15);
- un carénage (17), monté sur l'échangeur de chaleur (11), le carénage (17) délimitant un conduit (39) de guidage de l'écoulement d'air s'étendant le long d'un axe (A-A') d'écoulement, et comprenant une paroi périphérique (55) ;
- une hélice (23 ; 113) disposée dans le conduit de guidage (39), et des moyens d'entraînement (20) en rotation de l'hélice pour créer un écoulement d'air balayant l'échangeur de chaleur (11), la paroi périphérique (55) entourant la périphérie (33) de l'hélice (23) ;
**caractérisé en ce qu'**il comprend les étapes suivantes :
- mise à disposition d'un carénage (17) standard, d'une hélice (113) de diamètre extérieur sensiblement égal au diamètre intérieur de la paroi périphérique (55), d'une hélice (23) de diamètre extérieur sensiblement inférieur au diamètre intérieur de la paroi périphérique (55), et d'une couronne additionnelle (19) de guidage de l'écoulement d'air comprenant des moyens de fixation (21) destinés à coopérer avec des moyens complémentaires (63, 65) de fixation prévus sur le carénage (17),
- sélection d'une configuration de bloc avant (9), sur la base d'un ordre de commande donné, entre une première configuration dans laquelle le bloc avant (9) comprend :
* l'hélice (23) de diamètre extérieur sensiblement inférieur au diamètre intérieur de la paroi périphérique (55), montée sur le carénage standard (17) ; et
* la couronne additionnelle (19) de guidage de l'écoulement d'air, disposée entre la paroi périphérique (55) et la périphérie (33) de l'hélice (23) pour réduire la section de passage d'air dans le conduit (39) ;
et une deuxième configuration dans laquelle le bloc avant (9) comprend l'hélice (113) de diamètre extérieur sensiblement égal au diamètre intérieur de la paroi périphérique (55) montée sur le carénage standard (17) ;
- assemblage du bloc avant (9) suivant la configuration sélectionnée.

## Claims

1. Series of front parts (9) of automotive vehicles, each front part (9) comprising:
- a heat exchanger (11);
- a passage element (15);
- a fairing (17) mounted on the heat exchanger (11), the fairing (17) delimiting a guide duct (39) for guiding the air flow, extending along a flow axis (A-A') and comprising a peripheral wall (55);
- a propeller (23) disposed in the guide duct (39), and drive means (20) for rotating the propeller to create an air flow sweeping the heat exchanger (11);
- the peripheral wall (55) surrounding the periphery (33) of the propeller (23);
**characterised in that** the series comprises at least a first front part (9) comprising a propeller (23) the outer diameter of which is substantially less than the inner diameter of the peripheral wall (55);
the passage element (15) of the first front part (9) comprising an additional crown (19) for guiding the air flow, comprising fixing means (21) that cooperate with complementary fixing means (63, 65) provided on the fairing (17), the additional crown (19) being disposed between the peripheral wall (55) and the periphery (33) of the propeller (23) in order to reduce the air passage cross-section in the duct (39);
and **in that** the series comprises at least a second front part (9) comprising a propeller (113) the outer diameter of which is substantially equal to the inner diameter of the peripheral wall (55), the fairing (17) of the second front part (9) being identical to the fairing (17) of the first front part (9).

2. Series of front parts (9) according to claim 1, **characterised in that** the additional crown (19) extends substantially fully within the guide duct (39).

3. Series of front parts (9) according to either of claims 1 and 2, **characterised in that** the fixing means (21) and/or the complementary fixing means (63, 65) comprise means (95, 99) for blocking the axial movement of the crown (19) relative to the fairing (17).

4. Series of front parts (9) according to claim 3, **characterised in that** the blocking means (95, 99) comprise at least one front axial abutment (111) and at least one rear axial abutment (109), the front and rear axial abutments (111, 109) being solidly attached to the fairing (17) or the crown (19).

5. Series of front parts (9) according to claim 4, **characterised in that** the front and rear axial abutments (111, 109) are solidly attached to the crown (19) and bear on a front edge (63) and a rear edge (65), respectively, of the peripheral wall (55).

6. Series of front parts (9) according to any one of claims 1 to 5, **characterised in that** the fixing means (21) and/or the complementary fixing means (63, 65) comprise a plurality of fixing means (99) for the crown (19) which are disposed about the flow axis (A-A'), the crown (19) comprising reinforcing means (97) disposed between the fixing means (99).

7. Series of front parts (9) according to claim 6, taken together with claim 4, **characterised in that** one (109) of the front and rear axial abutments (111, 109) is solidly attached to the fixing means (99) and the other one (111) of the front and rear axial abutments is solidly attached to the crown (19).

8. Series of front parts (9) according to any one of the preceding claims, **characterised in that** the fixing means (21) are formed in one piece with the crown (19).

9. Series of front parts (9) according to any one of the preceding claims, **characterised in that** the propeller (23) comprises a peripheral shell (33) extending facing the crown (19), the facing surfaces of the shell and crown (19) being substantially complementary in shape.

10. Method of producing a series of front parts (9) of automotive vehicles, each front block (9) comprising:
- a heat exchanger (11);
- a passage element (15);
- a fairing (17), mounted on the heat exchanger (11), the fairing (17) delimiting a guide duct (39) for guiding the air flow, extending along a flow axis (A-A') and comprising a peripheral wall (55);
- a propeller (23) disposed in the guide duct (39), and drive means (20) for rotating the propeller to create an air flow sweeping the heat exchanger (11);
the peripheral wall (55) surrounding the periphery (33) of the propeller (23);
**characterised in that** it comprises the following steps:
- manufacture of at least a first front part (9) comprising the following phases:
* fixing, to a first fairing (17), an additional crown (19) for guiding the air flow, comprising fixing means (21) that cooperate with complementary fixing means (63, 65) provided on the fairing (17), and
* mounting a propeller (23) the outer diameter of which is substantially less than the inner diameter of the peripheral wall (55) on the fairing (17);
the additional crown (19) being disposed between the peripheral wall (55) and the periphery (33) of the propeller (23) in order to reduce the air passage cross-section in the duct (39);
- manufacture of at least a second front part comprising the mounting of a propeller (113) the outer diameter of which is substantially equal to the inner diameter of the peripheral wall (55) on a second fairing (17) identical to the first fairing (17).

11. Method of producing a front part (9) for an automotive vehicle, the front block (9) being of the type comprising:
- a heat exchanger (11);
- a passage element (15);
- a fairing (17), mounted on the heat exchanger (11), the fairing (17) delimiting a guide duct (39) for guiding the air flow, extending along a flow axis (A-A') and comprising a peripheral wall (55);
- a propeller (23; 113) disposed in the guide duct (39), and drive means (20) for rotating the propeller to create an air flow sweeping the heat exchanger (11);
the peripheral wall (55) surrounding the periphery (33) of the propeller (23);
**characterised in that** it comprises the following steps:
- the provision of a standard fairing (17), a propeller (113) the outer diameter of which is substantially equal to the inner diameter of the peripheral wall (55), a propeller (23) the outer diameter of which is substantially less than the inner diameter of the peripheral wall (55), and an additional crown (19) for guiding the air flow comprising fixing means (21) adapted to cooperate with complementary fixing means (63, 65) provided on the fairing (17),
- selection of a configuration for the front part (9), based on a given order received, between a first configuration in which the front part (9) comprises:
* the propeller (23) the outer diameter of which is substantially less than the inner diameter of the peripheral wall (55), mounted on the standard fairing (17); and
* the additional crown (19) for guiding the air flow, disposed between the peripheral wall (55) and the periphery (33) of the propeller (23) in order to reduce the air passage cross-section in the duct (39);
and a second configuration in which the front part (9) comprises the propeller (113) the outer diameter of which is substantially equal to the inner diameter of the peripheral wall (55), mounted on the standard fairing (17);
- assembly of the front part (9) according to the selected configuration.

## Patentansprüche

1. Reihe von Kraftfahrzeug-Frontbaugruppen (9), wobei jede Frontbaugruppe (9) folgendes umfasst:
- einen Wärmetauscher (11);
- ein Leitelement (15);
- eine Verkleidung (17), die auf dem Wärmetauscher (11) angebracht ist, wobei die Verkleidung (17) einen Führungskanal (39) zum Führen des Luftstroms begrenzt, der sich entlang einer Strömungsachse (A-A') erstreckt und eine Umfangswand (55) aufweist;
- ein Flügelrad (23), das in dem Führungskanal (39) angeordnet ist, sowie Mittel (20) für den Drehantrieb des Flügelrads, um einen Luftstrom zu erzeugen, der den Wärmetauscher (11) spült;
wobei die Umfangswand (55) den Umfang (33) des Flügelrads (23) umgibt;
**dadurch gekennzeichnet, dass** die Reihe wenigstens eine erste Frontbaugruppe (9) umfasst, die ein Flügelrad (23) mit einem Außendurchmesser aufweist, der deutlich kleiner als der Innendurchmesser der Umfangswand (55) ist;
wobei das Leitelement (15) der ersten Frontbaugruppe (9) einen zusätzlichen Luftstromleitkranz (19) umfasst, der Befestigungsmittel (21) aufweist, die mit komplementären Befestigungsmitteln (63, 65) zusammenwirken, die auf der Verkleidung (17) vorgesehen sind, wobei der zusätzliche Kranz (19) zwischen der Umfangswand (55) und dem Umfang (33) des Flügelrads (23) angeordnet ist, um den Luftdurchlassquerschnitt in dem Kanal (39) zu reduzieren;
und dadurch, dass die Reihe wenigstens eine zweite Frontbaugruppe (9) umfasst, die ein Flügelrad (113) mit einem Außendurchmesser umfasst, der etwa gleich dem Innendurchmesser der Umfangswand (55) ist, wobei die Verkleidung (17) der zweiten Frontbaugruppe (9) mit der Verkleidung (17) der ersten Frontbaugruppe (9) identisch ist.

2. Reihe von Frontbaugruppen (9) nach Anspruch 1, **dadurch gekennzeichnet, dass** der zusätzliche Kranz (19) sich im Wesentlichen vollkommen in dem Führungskanal (39) erstreckt.

3. Reihe von Frontbaugruppen (9) nach einem der Ansprüche 1 oder 2, **dadurch gekennzeichnet, dass** die Befestigungsmittel (21) und/oder die komplementären Befestigungsmittel (63, 65) Mittel (95, 99) zum Arretieren der axialen Verschiebung des Kranzes (19) in Bezug auf die Verkleidung (17) umfassen.

4. Reihe von Frontbaugruppen (9) nach Anspruch 3, **dadurch gekennzeichnet, dass** die Arretierungsmittel (95, 99) wenigstens einen vorderen axialen Anschlag (111) und wenigstens einen hinteren axialen Anschlag (109) umfassen, wobei die vorderen und hinteren axialen Anschläge (111, 109) mit der Verkleidung (17) oder dem Kranz (19) einstückig sind.

5. Reihe von Frontbaugruppen (9) nach Anspruch 4, **dadurch gekennzeichnet, dass** die vorderen und hinteren axialen Anschläge (111, 109) mit dem Kranz (19) einstückig sind und jeweils auf einer vorderen Kante (63) und einer hinteren Kante (65) der Umfangswand (55) aufliegen.

6. Reihe von Frontbaugruppen (9) nach einem der Ansprüche 1 bis 5, **dadurch gekennzeichnet, dass** die Befestigungsmittel (21) und/oder die komplementären Befestigungsmittel (63, 65) eine Vielzahl von Organen (99) zum Befestigen des Kranzes (19) umfassen, die um die Strömungsachse (A-A') angeordnet sind, wobei der Kranz (19) Verstärkungsorgane (97) umfasst, die zwischen den Befestigungsorganen (99) angeordnet sind.

7. Reihe von Frontbaugruppen (9) nach Anspruch 6 in Kombination mit Anspruch 4, **dadurch gekennzeichnet, dass** einer (109) der vorderen und hinteren axialen Anschläge (111, 109) mit dem Befestigungsorgan (99) einstückig ist, und der andere (111) der vorderen und hinteren axialen Anschläge mit dem Kranz (19) einstückig ist.

8. Reihe von Frontbaugruppen (9) nach einem der vorhergehenden Ansprüche, **dadurch gekennzeichnet, dass** die Befestigungsmittel (21) aus dem gleichen Werkstoff wie der Kranz (19) sind.

9. Reihe von Frontbaugruppen (9) nach einem der vorhergehenden Ansprüche, **dadurch gekennzeichnet, dass** das Flügelrad (23) einen Umfangsmantel (33) aufweist, der sich zum Kranz (19) hin erstreckt, wobei die Oberflächen zum Mantel und zum Kranz (19) hin im Wesentlichen komplementäre Formen aufweisen.

10. Verfahren zur Herstellung einer Reihe von Kraftfahrzeug-Frontbaugruppen (9), wobei jede Frontbaugruppe (9) folgendes umfasst:
- einen Wärmetauscher (11);
- ein Leitelement (15);
- eine Verkleidung (17), die auf dem Wärmetauscher (11) angebracht ist, wobei die Verkleidung (17) einen Führungskanal (39) zum Führen des Luftstroms begrenzt, der sich entlang einer Strömungsachse (A-A') erstreckt und eine Umfangswand (55) aufweist;
- ein Flügelrad (23), das in dem Führungskanal (39) angeordnet ist, sowie Mittel (20) für den Drehantrieb des Flügelrads, um einen Luftstrom zu erzeugen, der den Wärmetauscher (11) spült;
wobei die Umfangswand (55) den Umfang (33) des Flügelrads (23) umgibt;
**dadurch gekennzeichnet, dass** es die folgenden Schritte umfasst:
- Herstellung wenigstens einer ersten Frontbaugruppe (9), die folgende Phasen aufweist:
* Befestigung eines zusätzlichen Luftstromleitkranzes (19) an einer ersten Verkleidung (17), enthaltend Befestigungsmittel (21), die mit komplementären Befestigungsmitteln (63, 65) zusammenwirken, die an der Verkleidung (17) vorgesehen sind, und
* Montage eines Flügelrads (23) mit einem Außendurchmesser, der deutlich kleiner als der Innendurchmesser der Umfangswand (55) ist, an der Verkleidung (17);
wobei der zusätzliche Kranz (19) zwischen der Umfangswand (55) und dem Umfang (33) des Flügelrads (23) angeordnet ist, um den Luftdurchlassquerschnitt in dem Führungskanal (39) zu reduzieren;
- Herstellung wenigstens einer zweiten Frontbaugruppe, umfassend die Montage eines Flügelrads (113) mit einem Außendurchmesser, der etwa gleich dem Innendurchmesser der Umfangswand (55) ist, an einer zweiten Verkleidung (17), die mit der ersten Verkleidung (17) identisch ist.

11. Verfahren zur Herstellung einer Kraftfahrzeug-Frontbaugruppe (9), wobei die Frontbaugruppe (9) von dem Typ ist, der folgendes umfasst:
- einen Wärmetauscher (11);
- ein Leitelement (15);
- eine Verkleidung (17), die auf dem Wärmetauscher (11) angebracht ist, wobei die Verkleidung (17) einen Führungskanal (39) zum Führen des Luftstroms begrenzt, der sich entlang einer Strömungsachse (A-A') erstreckt und eine Umfangswand (55) aufweist;
- ein Flügelrad (23; 113), das in dem Führungskanal (39) angeordnet ist, sowie Mittel (20) für den Drehantrieb des Flügelrads, um einen Luftstrom zu erzeugen, der den Wärmetauscher (11) spült;
wobei die Umfangswand (55) den Umfang (33) des Flügelrads (23) umgibt;
**dadurch gekennzeichnet, dass** es die folgenden Schritte umfasst:
- Bereitstellung einer Standardverkleidung (17), eines Flügelrads (113) mit einem Außendurchmesser, der etwa gleich dem Innendurchmesser der Umfangswand (55) ist, eines Flügelrads (23) mit einem Außendurchmesser, der deutlich kleiner als der Innendurchmesser der Umfangswand (55) ist, und eines zusätzlichen Luftstromleitkranzes (19), der Befestigungsmittel (21) umfasst, die dazu bestimmt sind, mit komplementären Befestigungsmitteln (63, 65) zusammenzuwirken, die auf der Verkleidung (17) vorgesehen sind,
- Auswahl einer Konfiguration für die Frontbaugruppe (9) auf Basis einer gegebenen Befehlsabfolge aus einer ersten Konfiguration, in der die Frontbaugruppe (9) folgendes umfasst:
* das Flügelrad (23) mit einem Außendurchmesser, der deutlich kleiner als der Innendurchmesser der Umfangswand (55) ist, und das an der Standardverkleidung (17) angebracht ist; und
* den zusätzlichen Luftstromleitkranz (19), der zwischen der Umfangswand (55) und dem Umfang (33) des Flügelrads (23) angeordnet ist, um den Luftdurchlassquerschnitt in dem Kanal (39) zu reduzieren;
und aus einer zweiten Konfiguration, in der die Frontbaugruppe (9) das Flügelrad (113) mit einem Außendurchmesser aufweist, der etwa gleich dem Innendurchmesser der Umfangswand (55) ist, und das an der Standardverkleidung (17) angebracht ist;
- Zusammenbau der Frontbaugruppe (9) der ausgewählten Konfiguration entsprechend.
